Europäisches Patentamt

European Patent Office

Office européen des brevets

(19)

(11) Publication number: **0 045 898**

**A2**

(12) **EUROPEAN PATENT APPLICATION**

(21) Application number: **81105953.4**

(22) Date of filing: **28.07.81**

(51) Int. Cl.³: **G 01 J 3/02**

(30) Priority: **11.08.80 US 176707**

(43) Date of publication of application:
**17.02.82 Bulletin 82/7**

(84) Designated Contracting States:
**AT BE CH DE FR GB IT LI LU NL SE**

(71) Applicant: **Vitafin N.V.**

**Willemstad Curaçao Netherlands Antilles(NL)**

(72) Inventor: **Esch, Johannes Harm Lukas Hogen**
**Hoge Veld 75**
**NL-7122 ZN Aalten(NL)**

(74) Representative: **Ebbinghaus, Dieter K.L. Schiff Dr. A. v.**
**Füner et al,**
**Dipl. Ing. P. Strehl Dr. U. Schübel-Hopf Dipl. Ing. D.**
**Ebbinghaus Dr. Ing. D. Finck Patentanwälte**
**Mariahilfplatz 2&3**
**D-8000 München 90(DE)**

(54) Dual wavelength photometer with means for varying light signal wavelengths.

(57) An automated photometer is provided having a monochromator which generates light signals at least two controllable wavelength, for use in a dual wavelength analyzer system. Chopped light is alternately directed from two entrance slits 57 displaced from each other onto a fixed grating 60, thereby providing an alternating light source having light pulses at two defined wavelengths. The light signal is passed through one or more cuvettes 92A, 92B each containing a sample, and a photodetector 93A, 93B on the other side of the cuvette generates a periodic electrical signal representative of the absorbance of the test sample at the two defined wavelengths. An electronic processing channel 1, 2 is provided for each cuvette, adapted to process the periodic electrical signal which contains information derived at the two wavelengths and to provide output signals representative of the two absorbance values.

./...

_Fig. 5_

0045898

DUAL WAVELENGTH PHOTOMETER WITH MEANS
FOR VARYING LIGHT SIGNAL WAVELENTHS

## Background of the Invention

Prior art photometers contain conventionally a single wavelength monochromator, providing a light signal at a single selected and controllable wavelength. In such prior art photometers, the monochromator may be varied to produce different wavelengths by use of existing optical techniques, either by use of different filters or by varying the position of the grating relative to the light source, in a known fashion. However, these prior art arrangements are not useful in a dual wavelength fully automated photometer. The prior art grating system cannot be employed, because a single grating cannot be rotated relative to two different light sources, to obtain light signals at two different wavelengths. Although a dual or multiple wavelength photometer can be constructed using filters, such a system would be very complex and expensive if designed to provide for a large number of wavelengths, and could not be susceptible of the required automation for desired uses.

There is a great need at the present for a fully automated photometer providing light signals at two or more wavelengths, for use in dual wavelength analyzer systems. As an example of a dual wavelength system see co-pending U.S. Application S.N. 130,078, assigned also to Vitatron Scientific B.V.,

which application is incorporated herein by reference. Such a system, using dual reagent chemistry, requires a highly efficient and fully automated dual wavelength photometer, such that a serum sample can be analyzed simultaneously at two different frequencies, or light wavelengths. For use in such a system, as well as other potential uses, there exists a need for a type of photometer which heretofore has not been available in any efficient form, namely a plural wavelength photometer providing controlled light signals at two or more controllable wavelengths.

## Summary of the Invention

It is an object of this invention to provide a photo- meter which has means for generating light signals at two wavelengths, with a capability of varying each wavelength in a controlled fashion.

It is a further object of this invention to provide a plural wavelength monochromator, wherein the light signal produced contains respective different wavelengths at successive time periods of the signal.

It is another object of this invention to provide a light source which contains periodically alternating wavelengths, with means for controlling the frequency of generation of the alternation of the light source to different wavelengths.

Another object of this invention is to provide chopped light signals at two different wavelengths, and means to photo- analyse each of two serum samples, each sample being analyzed two different wavelengths. The means to photo-analyze comprises two analyzing channels, controlled in common with the light signal generator which provides the chopped light signals. The apparatus may be modified to provide chopped light signals containing more than two different wavelengths.

It is another object of this invention to provide a monochromator·to generate a light signal having successive and alternating different wavelengths, having a single fixed primary light source which couples to two or more movable light sources, and a fixed grating in a predetermined relationship with said movable light sources, whereby moving said movable light sources provides a single light signal having alternating different wavelengths, generated at a fixed position. Means is provided to move said movable light sources relative to the grating so as to change one or more wavelengths of the produced light signal.

Another object of this invention is to provide a light source generator which produces a periodic light signal having at least two different wavelengths in succeeding respective portions of the signal, the light source generator having feed-back control to maintain the frequency of repetition at about a predetermined frequency.

It is another object of this invention to provide a monochromator for producing a light signal having a periodic signal with two or more portions in each period having different wavelengths, the monochromator having a plurality of movable light sources in a predetermined geometrical relation with a fixed grating and a fixed exit position where said light signal is produced, and means for alternately coupling light to each of said plurality of movable light sources.

It is another object of this invention to provide a fully automated controllable dual wavelength photometer, for carrying out photometer tests at two different wavelengths, each of said wavelengths being variable within a predetermined range of the light spectrum including both ultraviolet and visible light.

In accordance with above objects there is provided a monochromator having a single fixed primary light source, in combination with a chopper designed to give alternating light pulses directed alternately to two light receptors. The light receptors are coupled through optic fiber connectors to movable entrance light slits, which direct light upon a fixed grating. The light slits are maintained at a constant radius from the center of the grating, such that the light from each entrance slit is always directed toward the center thereof. An exit slit is mounted in a fixed position, and receives light signals reflected from the grating center, having respective different wavelengths corresponding to the positions of the two entrance slits. Means is provided to move the entrance slits on a constant radius relative to the grating center, so as to change either wavelength of the dual wavelength alternating light signal. The light signal received at the exit slit is split and passed through a pair of cuvettes holding samples to be tested, and directed upon respective photodetectors, thereby generating two electrical signals each containing information relative to the absorbance of the test samples. Two electronic channels are further provided, each of which is adapted to process the two wavelengths signal from its respective photodetector source, thereby providing output signals representative of each sample as tested at the two different absorbance wavelengths.

## Brief Description of the Drawings

Fig. 1 is a schematic drawing of the arrangement of this invention for obtaining two variable monochromatic light signals combined into one periodic light signal.

Fig. 2 is a schematic drawing of means for controlling the position of the light signals incident upon the grating and thus fixing the wavelengths of the light signal produced by the monochromator of this invention.

Fig. 3 is a schematic drawing of the chopper arrangement for generating dual light signals, as used in the photometer of this invention.

Fig. 4A is a circuit diagram of the chopper control circuitry of this invention.

Fig. 4B illustrates chopper control timing signal wave forms.

Fig. 5 is an overall block diagram of a preferred embodiment of the photometer system of this invention.

## Description of the Preferred Embodiment

In the following description, the best known modes of the apparatus and method for practicing this invention are illustrated. However, it is to be understood that equivalent changes in portions of this system can be made within the scope of this invention.

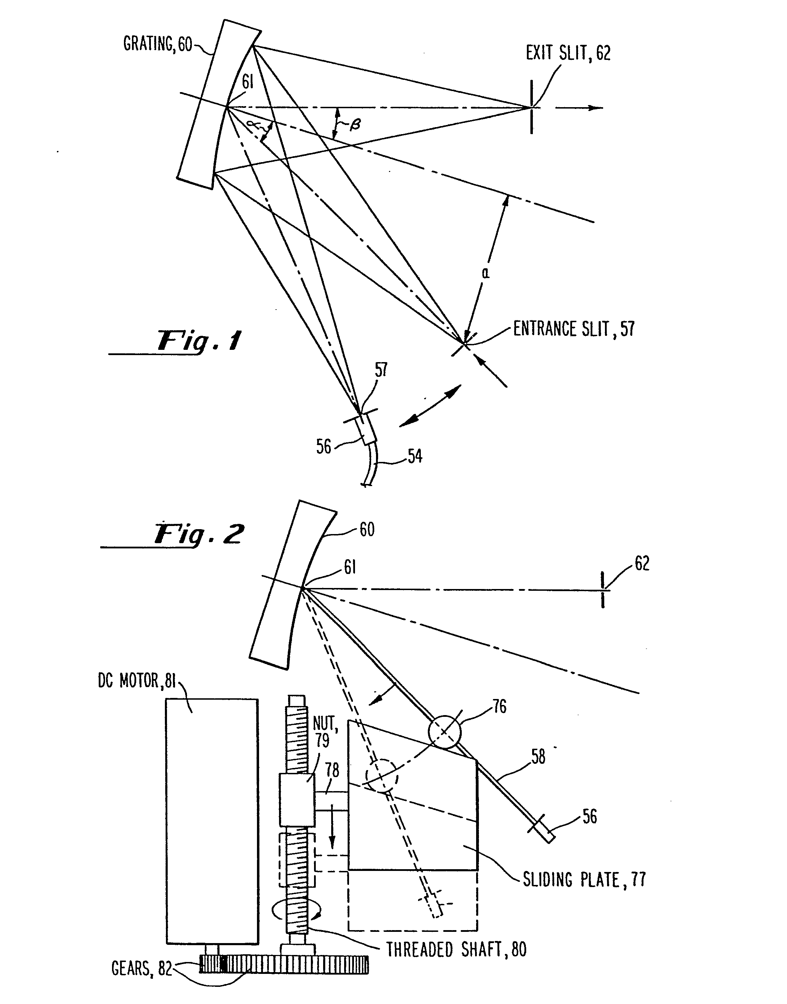

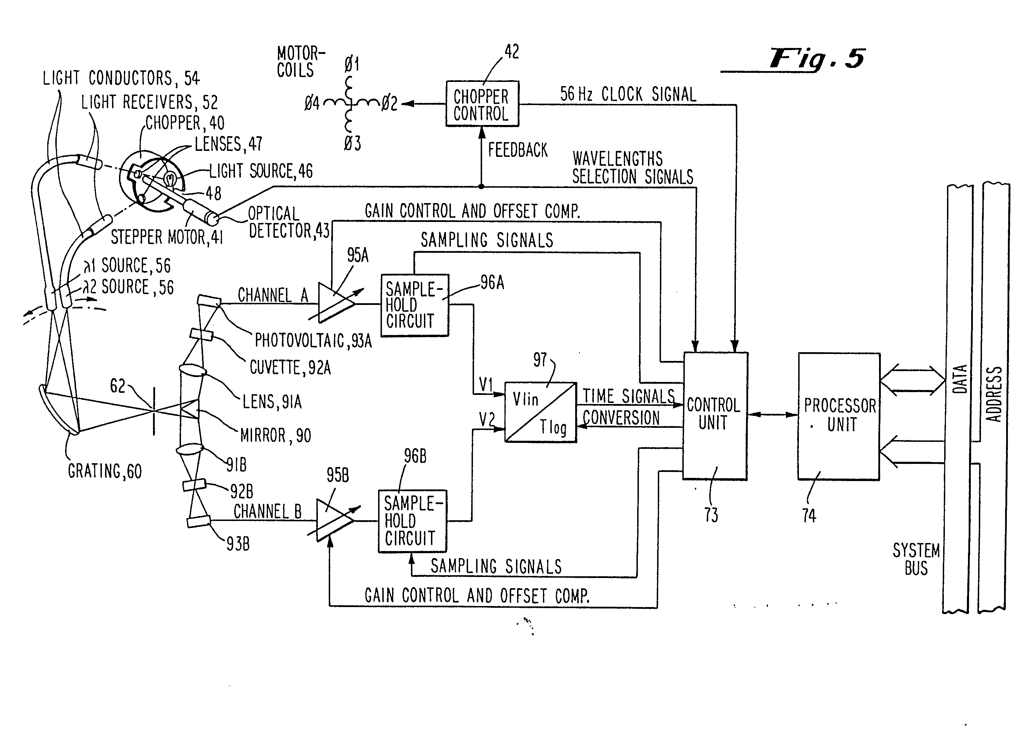

Referring now to Fig. 1, there is illustrated the basic technique used in the system of this invention for producing a dual wavelength light signal. The drawing of Fig. 1 shows the detailed geometry of the arrangement which is also illustrated in the system block diagram of Fig. 5.

A pair of light sources are provided, each comprising light conductor, or light fiber 54, which conducts light to a light source housing 56, having a slit at 57 therein and directed at a grating 60. The entrance slits 57 are suitably about 0.3 mm in width. Each housing 56 is movable relative to the center 61 of the grating, in a manner which is described in detail below in connection with Fig. 2.

Each light source is movable at a fixed radius of curvature relative to center 61. By way of example, such radius of curvature in the preferred embodiment is approximately 100 mm. By maintaining the light sources on the fixed radius of curvature and aimed at center 61, the light from each source is focused at an exit slit 62, also suitably about 0.3 mm in width, which is also suitably located about 100 mm from center 61.

The grating 60 may be any commercially available grating, having the required characteristics for this system. The characteristics of the grating are that it must focus light which is incident upon the center 61 from a fixed radius of curvature therefrom, upon the exit slit 62; the grating must also provide a dispersion of the beam reflected to the exit slit, to provide the desired monochromatic light at exit slit 62. For the preferred embodiment, the grating provides a displacement of approximately 600 nm/30°, or a 1° displacement of the incident light source produces a shift of the monochromatic light by 20 nm.

As seen in the drawing, the reflected light from center 61 is at an angle β relative to the line which is normal to the grating; the incident light is at an angle α relative to the normal line. The wavelength of the light produced at exit slit 62 is proportional to the sign of α , such that the wavelength is controlled by controlling the distance "a" and from the entrance slit 57 to the normal line. For the system as tested by applicant, the range of available wavelengths is from about 200 to 800 nm, although it is to be appreciated that the range can be in general wider, providing for both smaller and longer wavelengths. The radius of curvature and the distance from the grating center to the exit are design parameters in different systems, may be changed within the scope of this invention. Also, it is noted that the system can be arranged to have a single light source and two or more movable exit slits, to provide generation of a dual wavelength signal, with combination of the light signals from the two exit slits. Also, it is within the scope of this invention to move the light sources 56, 57 on a path other than the constant radius is illustrated, e.g. on a straight line, using a different grating design to properly reflect the light to the fixed exit slit.

Referring now to Fig. 2, there is shown in detail the means for moving the light source housings 56 which carry the light entrance slits 57, whereby different wavelengths are generated at exit slit 62.

Light source housing 56 is connected to and rotates on rod 58, which pivots around center 61. Rod 58 carries a roller 76 fixed at a point on the rod intermediate housing 56 and center 61. Roller 76 rides on the cam edge of sliding plate 77, which cam edge is illustrated as being parallel to the normal line of the grating. Plate 77 is moved in an up or down direction by arm 78 which is connected to a nut 79, which nut in turn is moved by threaded shaft 80. Shaft 80 is rotated by a DC motor 81 having an output shaft which is connected to gears 82 to drive the threaded shaft 80 in a forward or reverse direction, thereby moving the cam edge of plate 77 in an up or down direction. Since roller 76 is maintained at a fixed position relative to rod 58, the roller and light source housing 56 rotate at a constant radius, and light slit 57 is maintained directed toward grating center 61. In this manner, the light source, which is fed through optic fiber 54, is positioned accurately in accordance with the desirable wavelength. The motor 81 is suitably controlled by input signals from a micro processor, which processor is illustrated at block 74 in Fig. 5. By use of processor control, each wavelength can be adjusted accurately to a programmed value within the system range.

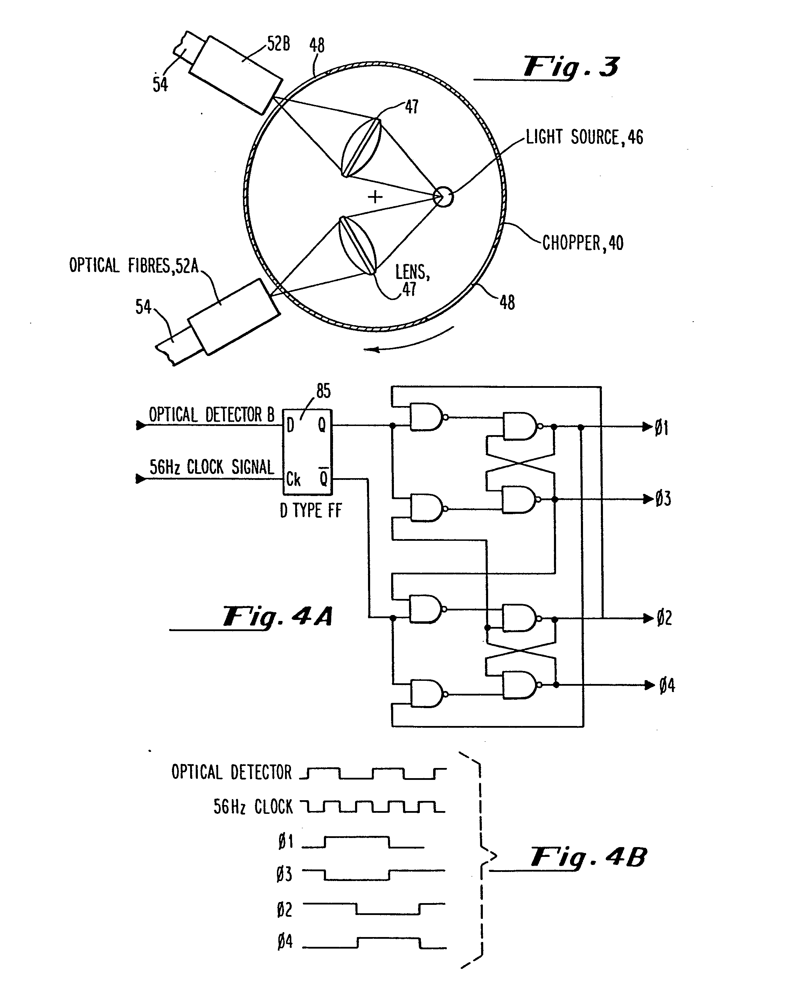

Referring now to Figs. 3, 4A and 4B, there is illustrated the chopper of this system which provides for the alternating light signal as used in this invention. A mechanical chopper 40, suitably made of aluminum, is driven by stepper motor 41. The openings, or windows 48 in the chopper cause light to pass from source 46 through lenses 47 to a first one of light receivers 52A, 52B and then a second one. As seen in the drawing, light is passing through the upper window to the upper light receiver 52B, from which it is conducted through optic fiber 54 to source housing 56, as also illustrated in Fig. 5. When the chopper has rotated about 45° from the position shown, light is blocked from both 52A and 52B.

When the chopper cylinder 40 has made approximately a quarter of a rotation, or 90°, light is blocked from the upper light receiver 52B but is transmitted through the other window to the lower receiver 52A. In this manner, an alternating light signal is provided, the light being alternately passed to one of the light receivers, the light being blocked from getting to either of the light receivers, the light then being passed for an equal time to the other receiver, and then for the fourth quarter of the cycle light again being blocked. The motor control illustrated in Fig. 5 drives chopper 40 at a rate of 28 Hz, such that each light fiber 54 carries a 56 Hz signal. As illustrated in Figs. 4B and 5, the stepper motor of 41 is a four coil motor, which is stabilized at a 28 Hz speed.

Optical detector 43 on chopper 40 produces a square wave signal at the frequency of rotation of the chopper, as seen in Fig. 4B. This signal is connected to the D input of flip flop 85, while the 56 Hz reference signal, supplied from the control unit 73, is connected to the clock input of the flip flop. At a start up of the motor, the chopper is not rotating at full speed, such that changes at the output of the flip flop are limited by the changes of the optical detector signal. The phase signal generating circuitry 86 causes drive signals to be delivered to the four windings of the four phase motor, causing it to accelerate. When the motor reaches and attempts to pass a speed of 28 Hz, then changes in the output of flip flop 85 are limited by the 56 Hz clock signal, such that changes connected through to the phase windings are limited to 56 Hz, causing the motor to be limited and controlled to 28 Hz operation. The 28 Hz feed-back signal is also connected through to control circuit as 73, as seen in Fig. 5.

Referring now to Fig. 5, there is illustrated a block diagram of the entire photometer unit. The light signal which is generated at exit slit 62 is a periodic signal at 28 Hz,

0045898

each cycle of this signal having first a lightpulse at the first controlled wavelength and then a succeeding pulse at a second controlled wavelength. The two wavelength signal is directed onto a mirror 90 which splits the signal such that it is directed to a pair of lenses 91A, 92B. The lenses in turn focus the two light signals each having two wavelengths, into a respective pair of cuvettes 92A, 92B. Each cuvette is loaded, through a conventional vacuum system, with the sample to be analyzed, and the alternating light is passed through this sample and detected at photodetectors 93A, 93B. The photodetectors provide two periodic electric signals, which contain information as to the absorbance of the respective samples at each of the two different wavelengths. By this manner, two samples can be each analyzed simultaneously at two different wavelengths.

Following the generation of the electric signals in the two photodetectors 93A, 93B, the signals are passed through two electronic channels, designated as channel 1 and channel 2 respectively. Each signal is first passed through a programmable amplifier, 95A or 95B, which has a programmed gain control and offset compensation control provided by the control unit 73. The gain control and offset compensation is provided to provide an output from the amplifier, for the given wavelength, which is within the range necessary to drive the following sample and hold circuit, 96A or 96B. Sampling signals, derived from the wavelength selection signals connected from the optical detector 43 on the chopper, provide a control of each sample and hold circuit 96A, 96B so as to first sample the signal at the first wavelength and then sample at the second wavelength.

Suitably, circuits 96A and 96B each comprise two samples and hold circuits for sampling the different wavelength portions of the channel signal. By suitable switching they alternate sampling the inputted signal (at the two different wavelengths) and connecting the sampled signal to the following converter circuit. The signals from 96A and 96B are connected as V1 and V2 into lin/log converter 97, for conversion of the signals from linear to logarithmic. The lin/log converter 97 is described in co-pending Dutch application Serial No.           , titled                                    , filed                    which is incorporated herein by reference.

The log signal for each wavelength provides the desired sample information. In summary, there is disclosed a dual wavelength photometer which is fully automated, and which can be controlled for photometer analysis of two samples at two wavelengths each. By obvious design modifications, the system of this invention may be modified to provide simultaneous analysis of more than two samples at two or more wavelengths each. Each wavelength of the combined light signal produced by the monochromator utilized in the photometer of this system may be varied independently of the other, along a continuous spectrum through a range including the ultraviolet and visible wavelengths. The dual or plural wavelength light signal is directed through the two or more cuvettes which hold samples upon which the tests are to be performed, and two or more corresponding electrical signals containing the sample information are processed through each of two or more electronic channels to provide signals representative of the absorbance property of the sample in each cuvette. The electronic processing is controlled in a time sequence which is tied to the generation of the light source, so that the channel processing is related to the wavelength at which each sample is being analyzed at the particular moment. By this means there is provided a highly flexible and completely automated photometer system providing for dual reagent analysis of a plurality of samples. This provides for a speed of operation and a degree of automation which has heretofore been unavailable in photometer analyzer systems.

Although the photometer of this invention has been illustrated as one designed for application in a sample analysis system, wherein each sample is to be analyzed at a single discrete wavelength at any given time, it is to be understood that the monochromator arrangement of this invention is applicable to other systems and uses. For example, in other applications such as communications it may be desired to generate continuous light signals at a plurality of wavelengths, i.e., having two or more discrete wavelength components. In such a case, the light incident from each entrance slit may be continuous, i.e. the chopper is not used. For the illustrated arrangement of Fig. 1, a continuous light signal is directed from each entrance slit 57, reflected off grating 60 and collected at exit slit 62, providing a continuous light signal which has two discrete wavelength components. Alternately, a single entrance slit can be used at a fixed angle relative to the grating, and a plural exit slit can be utilized at different controllable angles relative to the grating, to collect different wavelength signals. In a typical communications application, a plurality of time modulated light signals may be directed at different angles against the grating, producing a plural wavelength continuous light signal at the exit slit, which effectively provides for a plural carrier light signal. At the
receiving end of the communication system, the plural wavelength continuous signal may be directed against a grating of
the same design, used as a demodulator, and plural exit slits
are positioned at respected angles to pick up the respective
discrete wavelength components, thus separating the carriers
for convenient demodulation. Thus it is seen that the basic
arrangement of Fig. 1 is applicable in a variety of uses, and
the generated light signal may be pulsed having discrete components at different wavelengths, or continuous with a combination of discrete wavelength components.

CLAIMS

1. A plural wavelength photometer for producing a light signal having plural wavelength components, having an optical grating (60) for providing spectral dispersion of light incident thereon, c h a r a c t e r i z e d  by:
   - one or more light sources (56) for directing incident light onto said grating from respective different angles;
   - light collecting means (62) for generating said plural wavelength light signal, comprising one or more light collectors for collecting light reflected from said grating, each of said one or more light collectors being positioned at a respective different angle relative to said grating; and
   - means (58) for positioning either said one or more light sources (56), or said one or more light collectors (62) relative to said fixed grating (60), whereby the discrete wavelength of the plural wavelength light signal are determined.

2. The photometer as described in claim 1, comprising means for moving (76 - 82) either said one or more light sources (56), or said one or more light collectors (62) relative to said grating, whereby the discrete wavelengths of the plural wavelength light signal are varied.

3. The photometer as described in claim 1, comprising a plurality of light sources (56) at respective positions;
   - means (58) for directing said light sources (56) so that light signals therefrom are incident onto said grating (60), from which said light signals are reflected; and
   - said light collecting means comprising exit light means (62) for collecting said reflected signals.

4. The photometer as described in claim 3, for generating a light signal having alternating light pulses at two or more discrete wavelengths,further  c h a r a c t e r i z e d by:

- said plurality of light sources comprising
  - two light coupling means (54) for coupling light over
    a distance, each having an input (52) and an output
    (56) light source, and
  - light source means (46, 40) for providing light pulses alternately to said coupling means inputs, and
- wherein said exit light means (62) generates a plural
  wavelength light signal by collecting light pulses reflected from said grating (60), said plural wavelength
  light signal having alternating wavelength components
  which are determined by the positions of said output
  light sources relative to said grating.

5. The photometer as described in claim 4, wherein said grating (60) is fixed in position, and said coupling outputs
(56) are variable with respect to their angle of incidence
upon said grating.

6. The photometer as described in claim 4, wherein said out-
put light sources (56) are variable in position along a
constant radius from the center of said grating (60).

7. The photometer as described in claim 4, wherein said exit
light means (62) comprises a light splitter (90) for
splitting the plural wavelength light signal into two beams.

8. The photometer as described in claim 4, in combination with
a cuvette (92A, 92B) adapted to hold a sample and a photodetector (93A, 93B), said exit light means (62), cuvette
and photodetector being arranged in an optical path such
that a light signal generated by said exit light means (62)
is passed through said cuvette (92A, 92B) and focused upon
said photodetector (93A, 93B), whereby the photodetector
generates an electrical signal containing information representative of the absorbance of the sample in said cuvette.

9. The photometer as described in claim 8, comprising electric channel means (channels 1, 2) for processing the electric signal from said photodetector (93A, 93B) to obtain a signal representative of the absorbance of the sample in said cuvette (92A, 92B) at each of the wavelengths of said plural wavelength signal.

10. The photometer as described in claim 4, having means for controlling the position of each of said output light sources (56), whereby the two wavelengths of the generated light signal are controllable over a predetermined wavelength range.

11. The photometer as described in claim 10, wherein said wavelength range includes ultraviolet, visible, and infrared light.

12. The photometer as described in claim 10, wherein said means for moving said light coupling outputs (56) comprises a motor (81) and a motor drive means (85) for controlling the position of said motor, said motor drive means being digital, whereby said light outputs are movable to programmed positions corresponding to programmed wavelengths.

13. The photometer as described in claim 1, comprising two movable light sources (56) and one fixed light collector (62).

14. The photometer as described in claim 13, comprising means (76) for controllably moving each of said light sources (56) at a constant radius to said grating (60).

GRATING, 60

EXIT SLIT, 62

ENTRANCE SLIT, 57

*Fig. 1*

*Fig. 2*

DC MOTOR, 81

NUT, 79

SLIDING PLATE, 77

THREADED SHAFT, 80

GEARS, 82

_Fig. 3_

52B   48

54

47

LIGHT SOURCE, 46

+

CHOPPER, 40

OPTICAL FIBRES, 52A

LENS, 47

48

54

OPTICAL DETECTOR B    D    Q    85

56Hz CLOCK SIGNAL    Ck    $\overline{Q}$

D TYPE FF

Ø1

Ø3

Ø2

Ø4

_Fig. 4A_

OPTICAL DETECTOR

56Hz CLOCK

Ø1

Ø3

Ø2

Ø4

_Fig. 4B_

Fig. 5